# EUROPÄISCHE PATENTSCHRIFT

(11) **EP 1 088 028 B1**
(45) Veröffentlichungstag und Bekanntmachung des Hinweises auf die Patenterteilung: **11.09.2002**
(21) Anmeldenummer: 99952095.0
(22) Anmeldetag: 18.05.1999
(51) Int. Cl.: C08K 13/04, C08K 9/10, F16D 69/02

(54) **REIBUNGSBEANSPRUCHTES KUNSTSTOFFBAUTEIL**
PLASTIC COMPONENT SUBJECTED TO FRICTION
COMPOSANT EN MATIERE SYNTHETIQUE SOLLICITE EN FRICTION

(30) Priorität: 18.05.1998 DE 19822272
(43) Veröffentlichungstag der Anmeldung: 04.04.2001
(73) Patentinhaber: FRAUNHOFER-GESELLSCHAFT ZUR FÖRDERUNG DER ANGEWANDTEN FORSCHUNG E.V., 80636 München (DE)
(72) Erfinder: BECKMANN, Carola, D-31862 Cremlingen (DE); BRAND, Jochen, D-38126 Braunschweig (DE)
(86) Internationale Anmeldenummer: EP9903411
(87) Internationale Veröffentlichungsnummer: WO99060059

(56) Entgegenhaltungen:
- US-A- 4 504 543

## Beschreibung

### Technisches Gebiet

Die Erfindung betrifft ein reibungsbeanspruchtes Kunststoffbauteil nach dem Oberbegriff des Anspruchs 1. Bevorzugtes Anwendungsgebiet sind reibungsbeanspruchte Dichtungen, Lager und Führungselemente aus Kunststoffen.

### Stand der Technik

In vielen Anwendungen werden von Kunststoffbauteilen gute Reibeigenschaften und geringer Verschleiss gefordert um eine möglichst hohe Lebensdauer des Bauteils zu gewährleisten. Zur Verbesserung der tribologischen Eigenschaften ist es bekannt, in die Kunststoffe Trockenschmierstoffe wie zum Beispiel MoS₂ oder Graphit einzubetten. Beim abrasiven Verschleiss des Kunststoffbauteils werden diese freigesetzt und entfalten ihre reibungs- und verschleissmindernde Eigenschaft.

Nachteilig bei dieser Lösung ist, dass nur trockene Schmierstoffe in die Kunststoffe eingebracht werden können. Dadurch ist die Auswahl an einsetzbaren Schmierstoffen stark begrenzt. Der Einsatz nicht trockener Schmierstoffe, und insbesondere von flüssigen Schmierstoffen, scheidet damit grundsätzlich aus. Auch ist damit die Auswahl einer optimalen Kombination von Schmierstoff und Reibpartnern nicht möglich.

Ein weiterer Nachteil der oben genannten Lösung besteht darin, dass die als Partikel in den Kunststoff eingeschlossenen Trockenschmierstoffe nur mechanisch von der Kunststoffumgebung festgehalten werden. Wird die benachbarte Kunststoffumgebung durch Reibung partiell abgetragen, so entsteht auf der dem Reibepartner zugewandten Seite eine entsprechende Öffnung. Durch diese Öffnung könen die Partikel sowohl den Kunststoff als auch den Wechselwirkungsbereich verlassen ohne ihre Sollfunktion zu erfüllen. Dies ist insbesondere dann nachteilig, wenn die Reibpartner zusätzlich mit einem Flüssigschmierstoff vor Reibung und Verschleiss geschützt werden. In diesem Fall kann der Trockenschmierstoff leicht vom Flüssigschmierstoff aufgenommen, und durch diesen vom tribologisch beanspruchten Bereich entfernt werden ohne seine Wirkung zu entfalten. Dies gilt ganz besonders dann, wenn der Flüssigschmierstoff zusätzlich einer Umwälzung unterworfen ist.

Ein weiterer erheblicher Nachteil der oben genannten Lösung besteht darin, dass der mechanische Einbau von Trockenschmierstoffen die mechanischen Eigenschaften wdes Kunststoffbauteils nachteilig verändert. So könenn die Bauteile brüchig werden, an Festigkeit verlieren oder es kann auch die Temperaturbeständigkeit schlechter werden. Insbesondere bei Elastomerbauteilen verkleinert sich in der Regel das Elastizitätsmodul und damit verschlechtem sich die Verformungseigenschaften, was zu Fehlfunktionen des Bauteils führen kann, z. B. Leckagen an Dichtflächen.

Die US 4,504,543 A offenbart einen Reibbelag für eine Nähmaschine, bestehend aus Kork und einem Bindemittel wie Harz. Zur Gewährleistung eines gleichmäßigeren Reibverhaltens des Korks wird vorgeschlagen, dem Reibbelag Mikrokapseln zuzugeben die ein flüssiges Schmiermittel beinhalten.

### Darstellung der Erfindung

Der Erfindung liegt das technische Problem zugrunde, reibungsbeanspruchte Kunststoffbauteile zur Verfügung zu stellen, in denen beliebige tribologisch wirksame Inhaltsstoffe eingebaut werden können. Der Einschluss der Inhaltsstoffe in das Kunststoffbauteil soll nicht nur mechanisch erfolgen, sondern vielmehr durch chemische Bindungen mit den Kunststoffmaterial. Auch sollen die mechanischen Eigenschaften des Kunststoff-Ausgangsmaterials, und dabei insbesondere seine Elastizität, nicht verändert werden.

Erfindungsgemäss wurde erkannt, dass sich diese Probleme durch ein im **Spritzgussverfahren hergestelltes Elastomer-Bauteil** lösen lassen, welches Mikrokapseln beinhaltet, wobei die Mikrokapseln bei ihrer reibungsbedingten Beschädigung mindestens einen tribologisch wirksamen Inhaltsstoff freisetzen der die gewünschte reibungs- und verschleissreduzierende Wirkung entfaltet.

Die Herstellung von Mikrokapseln ist allgemein bekannt. Die Mikrokapseln werden vor der Kunststofformgebung der Kunststoffmasse zugegeben und bestehen aus einer Membranhülle und den darin eingeschlossenen Inhalts- bzw. Füllstoffen. Hüllen- als auch Füllmaterialien können dabei aus den verschiedensten Stoffen bestehen.

Der verwendete Kunststoff kann im Sinne der Erfindung beliebig gewählt werden. Geeignet sind zum Beispiel Duro- oder Thermoplaste. Wegen ihrer Elastizität besonders geeignete Kunststoffe sind Elastomere, zum Beispiel solche die in einem Spritzgussverfahren hergestellt sind.

Durch eine geeignete Wahl des Hüllenmaterials kann eine Anpassung an das Matrixmaterial und die Verarbeitungsbedingungen sichergestellt werden. Eine derartige Anpassung ist von seinen Grundsätzen her allgemein bekannt. Die Anpassung an das Hüllenmaterial wird so vorgenommen, dass das Hüllenmaterial mit der Kunststoffmatrix chemische Bindungen eingeht. Durch die chemischen Bindungen werden die Mikrokapseln fest mit der Matrix verbunden und eine rein mechanische Einbettung wie bei den Trockenschmierstoffpartikeln nach dem Stand der Technik wird vermieden.

Dadurch ist es ausgeschlossen, dass die Mikrokapsel ohne Ausschüttung des Inhaltsstoffs den tribologisch beanspruchten Bereich verlässt.

Für die oben genannte Anpassung ist es günstig, wenn die Membranhülle auch aus einem Kunststoff besteht, welcher zudem von dem oder den Inhaltsstoffen nicht angegriffen wird. Hierfür geeignete Inhaltsstoffe können flüssig und fest sein. Für viele Anwendungen geeignet sind insbesondere Öle und Fette, aber auch Trockenschmierstoffe wie zum Beispiel MoS₂, Teflon oder Graphit. Durch die Aufnahme der Inhaltsstoffe in Mikrokapseln stehen eine sehr grosse Anzahl von tribologisch wirksamen Inhaltstoffen zur Verfügung welche eine flexible Abstimmung der Inhaltsstoffe auf den Anwendungsfall erlauben. Der gleichzeitige Einsatz von Mikrokapseln mit unterschiedlichen Inhaltsstoffen ist auch möglich.

Die Mikrokapseln weisen eine im wesentlichen runde Form auf und besitzen einen ziemlich genau einstellbaren Durchmesser von ca. 0,5 µm bis 1000 µm. Die Menge an Inhaltsstoffen im Bauteil kann über das Kapselvolumen und über den Volumenanteil der Kapseln am Bauteilvolumen in weiten Grenzen eingestellt werden. Für die meisten Anwendungsfälle sollte ein Volumenanteil der eingeschlossenen Inhaltsstoffe von max. 25% des Bauteilvolumens ausreichen.

Der Einsatz der erfindungsgemäßen Kunststoffbauteile bietet sich überall dort an, wo Kunststoffe tribologisch stark beansprucht werden. Beispiele sind Dichtungen (z.B. Dichtringe, insbesondere Wellendichtringe), Lager (z.B. Wälz- und Gleitlager) und Führungselemente (z.B. Führungsschienen, -rinnen, -platten, -stifte). Diese Anwendungsfälle sind dadurch charakterisiert, dass die tribologisch beanspruchten Stellen stets den gleichen Reibepartner sehen, zum Beispiel wegen periodischen mechanischen Bewegungen der Reibepartner. Wenn es bei den Anwendungen auch auf die elastischen Eigenschaften ankommt (z.B. bei Dichtungen), so bietet sich eine Kunststoffmatrix aus einem Elastomer an.

Für einen effizienten Einsatz der mikroverkapselten Inhaltsstoffe bietet es sich an, Mikrokapseln vorzugsweise oder sogar ausschließlich in den tribologisch beanspruchten Volumenbereichen des Bauteils vorzusehen. Insbesondere bei grossen Teilen ist dann die eingesetzte Menge an Mikrokapseln deutlich geringer was zu einer Kosteneinsprung führt. Weiterhin treten die Schmierstoffe dann nur an den Stellen aus, an denen sie gebraucht werden.

Der lokal begrenzte bzw. verstärkte Einbau von Mikrokapseln in diesen tribologisch beanspruchten Volumenbereichen erfolgt durch geeignete Spritzverfahren.

Bester Weg zur Realisierung der Erfindung.

Die erfindungsgemäßen Kunststoffbauteile können mit Vorteil bei Bauteilen eingesetzt werden, die aus mehreren Kunststoffteilen bestehen, wie zum Beispiel Wellendichtringe. Derartige Dichtringe bestehen meist aus Elastomeren mit angespritzten oder geklebten Dichtlippen aus einem anderen Material. Diese zweite Material kann zum Beispiel Teflon oder ein anderer verschleissfester Kunststoff sein. Im wesentlichen wird nur die Dichtlippe tribologisch beansprucht. Die Dichtlippe kann im Sinne der Erfindung ein mikrokapselhaltiges Elastomer sein, bei dem die Mikrokapseln ein Schmieröl enthalten. Ausschließlich der Volumenbereich der Dichtlippe enthält im Sinne des Patentanspruchs 7 Mikrokapseln. Die lokal gewünschten Oberflächeneigenschaften können so ohne Veränderung der Gesamtbauteileigenschaften realisiert werden.

## Patentansprüche

1. Reibungsbeanspruchtes Kunststoffbauteil welches Mikrokapseln beinhaltet die bei ihrer Beschädigung mindestens einen tribologisch wirksamen Inhaltsstoff freisetzen, **dadurch gekennzeichnet, dass** es sich um ein im Spritzgussverfahren hergestelltes Elastomerbauteil handelt.

2. Kunststoffbauteil nach Anspruch 1, **dadurch gekennzeichnet, dass** es sich bei den Inhaltsstoffen um Öle, Fette oder Festschmierstoffe handelt.

3. Kunststoffbauteil nach einem der Ansprüche 1 oder 2, **dadurch gekennzeichnet, dass** Mikrokapseln mit einer Kunststoffmembran vorgesehen sind.

4. Kunststoffbauteil nach mindestens einem der Ansprüche 1 bis 3, **dadurch gekennzeichnet, dass** der Durchmesser der Mikrokapseln im Bereich zwischen 0,5 µm und 1000 µm liegt.

5. Kunststoffbauteil nach mindestens einem der Ansprüche 1 bis 4, **dadurch gekennzeichnet, dass** der Volumenanteil der eingeschlossenen Inhaltsstoffe max 25% des Bauteilvolumens beträgt.

6. Kunststoffbauteil nach mindestens einem der Ansprüche 1 bis 5, **dadurch gekennzeichnet, dass** Mikrokapseln vorzugsweise in den tribologisch beanspruchten Volumenbereichen des Bauteils vorhanden sind.

7. Kunststoffbauteil nach mindestens einem der Ansprüche 1 bis 5, **dadurch gekennzeichnet, dass** Mikrokapseln ausschließlich in den tribologisch beanspruchten Volumenbereichen des Bauteils vorhanden sind.

8. Kunststoffbauteil nach mindestens einem der Ansprüche 1 bis 7, **dadurch gekennzeichnet, dass** es sich bei den Kunststoffbauteilen um Dichtungen, Lager und Führungselemente handelt.

## Claims

1. Plastic component subjected to friction which comprises microcapsules which release at least one tribologically effective ingredient when said capsules are damaged, **characterised in that** it concerns an elastomer component produced by the injection-moulding method.

2. Plastic component according to claim 1, **characterised in that** the ingredients concern oils, fats or solid lubricants.

3. Plastic component according to one of the claims 1 or 2, **characterised in that** microcapsules with a plastic membrane are provided.

4. Plastic component according to at least one of the claims 1 to 3, **characterised in that** the diameter of the microcapsules lies in the range between 0.5 mm and 1000 mm.

5. Plastic component according to at least one of the claims 1 to 4, **characterised in that** the volume proportion of the enclosed ingredients is maximum 25% of the component volume.

6. Plastic component according to at least one of the claims 1 to 5, **characterised in that** microcapsules are present preferably in the tribologically stressed volume regions of the component.

7. Plastic component according to at least one of the claims 1 to 5, **characterised in that** microcapsules are present exclusively in the tribologically stressed volume regions of the component.

8. Plastic component according to at least one of the claims 1 to 7, **characterised in that** the plastic components concern seals, bearings and guide elements.

## Revendications

1. Composant en matière synthétique sollicité en friction qui renferme des microcapsules qui libèrent lors de leur endommagement, au moins un ingrédient tribologiquement actif,
**caractérisé en ce qu'**
il s'agit d'un composant élastomère produit dans un procédé de moulage par injection.

2. Composant en matière synthétique selon la revendication 1,
**caractérisé en ce qu'**
il s'agit en ce qui concerne les ingrédients, d'huiles, de matières grasses ou d'agents lubrifiants pour solides.

3. Composant en matière synthétique selon l'une quelconque des revendications 1 ou 2,
**caractérisé en ce que**
les microcapsules sont pourvues d'une membrane en matière plastique.

4. Composant en matière synthétique selon l'une quelconque des revendications 1 à 3,
**caractérisé en ce que**
le diamètre des microcapsules se situe dans la zone comprise entre 0,5 µm et 1000 µm.

5. Composant en matière synthétique selon l'une quelconque des revendications 1 à 4,
**caractérisé en ce que**
la proportion en volume des ingrédients inclus s'élève au maximum à 25 % du volume de l'élément de construction.

6. Composant en matière synthétique selon l'une quelconque des revendications 1 à 5,
**caractérisé en ce que**
des microcapsules sont présentes dans le composant de préférence dans les zones de volume soumises à une contrainte tribologique.

7. Composant en matière synthétique selon l'une quelconque des revendications 1 à 5,
**caractérisé en ce que**
des microcapsules sont présentes dans le composant exclusivement dans les zones de volume soumises à une contrainte tribologique.

8. Composant en matière synthétique selon l'une quelconque des revendications 1 à 7,
**caractérisé en ce que**
les composants en matière synthétique sont des joints, des paliers ou des éléments de guidage.
